# EUROPEAN PATENT SPECIFICATION

(11) **EP 2 210 910 B1**
(45) Date of publication and mention of the grant of the patent: **02.01.2013**
(21) Application number: 09151008.1
(22) Date of filing: 21.01.2009
(51) Int. Cl.: C08G 63/183, C08G 63/83, C08G 63/85, C08G 63/82

(54) **Antimony-free PET resin and PET polyester fiber made therefrom**
Antimonfreies PET-Harz und daraus hergestellte PET-Polyesterfaser
Résine PET sans antimoine et fibre en polyester PET fabriquée avec celle-ci

(43) Date of publication of application: 28.07.2010
(73) Proprietor: NAN YA PLASTICS CORPORATION, Taipei (TW)
(72) Inventor: Jen, Zo-Chun, Taipei (TW)
(74) Representative: Beck & Rössig European Patent Attorneys

(56) References cited:
- EP-A- 1 013 692
- EP-A- 1 491 572
- EP-A- 1 541 613
- EP-A- 2 006 315

## Description

### BACKGROUND OF THE PRESENT INVENTION

### 1. Field of the Present Invention

The present invention relates to an antimony-free PET resin produced with inorganic Ti-Mg catalyst and a small amount of dyes and, more particularly, to a PET polyester fiber produced from the PET resin having a good color tone and glossiness.

### 2. Description of Prior Art

In a conventional synthesis process of PET (polyethylene terephthalate), purified terephthalic acid (PTA) and ethylene glycol (EG) are the raw materials to be reacted through a first-stage direct esterification process and a second-stage polycondensation process. An antimony (Sb) catalyst is conventionally added in the second-stage polycondensation process as a polycondensation catalyst. If necessary, a solid-state polymerization process optionally follows the second-stage polycondensation process to increase the molecular weight of the resultant PET resin.

The PET resin such produced, due to its excellent mechanical strength and chemical resistance, is suitable to produce PET polyester fiber. However, for producing PET polyester fiber from the PET resin, in the melt spinning process, a considerable amount of ethylene glycol antimony is evaporated and accumulated on the spinneret because of the antimony-containing polycondensation catalyst for use with the PET resin. Consequently, the accumulated ethylene glycol antimony needs to be frequently wiped from the spinneret or the molten PET polyester can be obstructed from smoothly gushing from orifices of the spinneret, tending to result in yam breaks.

To remedy this problem, a known approach to PET resin processing technology is to implement a titanium-containing polycondensation catalyst as a replacement for the conventional antimony-containing polycondensation catalyst. This does help prevent filament breaks. However, such titanium-containing polycondensation catalyst can give a yellowish hue to the resultant PET resin, rendering the PET polyester fiber manufactured therefrom less commercially desired due to its yellowish look.

As a known alternative solution, a phosphorus stabilizer is added during the PET resin process in order to reduce the yellowish look of the PET resin caused by the titanium-containing polycondensation catalyst. For instance, U.S. Patent Application Publication No. 2006/0014920 discloses a mixture-based catalyst mixed by tetrabutyltitanate (TBT), product of reaction of TBT and trimellitic anhydride, and triethyl phosphonoacetate (TEPA).

Besides, according to Japanese Patent Application Publication No. 2005-015630, another mixture-based catalyst is adapted to solve the problem of the yellowish look of a PET resin. To obtain the catalyst, a titanium-containing chelate compound made of titanium tetraisopropoxide and citric acid is firstly put into reaction with phosphoric acid to produce a phosphureted titanium chelate catalyst, and then the phosphureted titanium chelate catalyst is added with cobalt acetate, manganese acetate and a phosphide having a ring consisting of six or more members.

Prior art also includes EP 1013692 A2 which discloses a preparation of antimony-free PET by esterification of high-purity terephthalic acid and ethylene glycol, then adding a Ti-Mg polycondensation catalyst undergoing a polyconensation reaction. The obtained PET has an intrinsic viscosity of 0.58 dl/g. The titanium atom content of the PET ranges from 1 to 100 ppm, the magnesium atom content ranges from 1 to 200 ppm and the molar ration of Mg/Ti ranges from 1/50 to 50/1. The prior art also discloses that red and blue dyes may be added in an amount of 0.1 to 50 ppm based on the weight of the polyester as tint adjusting agent. While the defect is that a phosphorus stabilizer (e.g., tributyl phosphate or phosphoric acid) still should be added during the PET resin process to reduce the yellowish look of the PET resin caused by the Ti-Mg polycondensation catalyst containing a large amount of titanium element to promote polycondensation reaction.

Also, according to the prior art, Titanium Dioxide (TiO₂) is used as a delustering agent to improve glossiness of resultant PET polyester fiber. Where a PET resin is to be produced with the titanium-containing polycondensation catalyst and phosphorus stabilizer, in order to improve the yellowish look, together with a TiO₂ additive for providing functions different from catalysis, TiO₂ in the additive is subject to aggregation due to the presence of the phosphorus stabilizer, and the aggregation can adversely affect the quality of the resultant PET polyester fiber.

### SUMMARY OF THE INVENTION

In view of the above-mentioned problems ensuing from the conventional approaches, the present invention discloses a PET resin which is produced by using an inorganic Ti-Mg catalyst and a small amount of dyes and a PET polyester fiber produced from the PET resin and improved in both color tone and glossiness. Given the inorganic Ti-Mg catalyst, the PET resin does not require any phosphorus stabilizer and is less yellowish due to the small amount of dyes used. Particularly, the PET resin requires neither an antimony catalyst nor a phosphorus stabilizer, and thus a later melt spinning process for producing PET polyester fiber is free from yam breaks and TiO₂ aggregation so that the PET polyester fiber has the advantage of being commercially desired in both color tone and glossiness.

The PET resin is produced by a method as indicated in the claims.

According to the present invention, the PET resin and the PET polyester fiber made therefrom contain no antimony, and are therefore environmentally friendly by causing no heavy metal pollution to the environment.

### DETAILED DESCRIPTION OF THE PREFERRED EMBODIMENT

A PET resin of the present invention is characterized in being antimony-free and produced by using an inorganic Ti-Mg catalyst and a small amount of dyes to improve the color tone.

The PET resin disclosed herein is produced by a method described below:
(a) undergoing a first-stage direct esterification reaction in a reactor to obtain a reaction mixture by reacting a diacid component and a diol component; preferably by reacting purified terephthalic acid (PTA) and ethylene glycol (EG);
(b) after step (a) being completed, based on the total PET resin weight, adding an inorganic Ti-Mg catalyst containing titanium element 2 to 10ppm in an amount of ranging from 30 to 150ppm, a blue dye in an amount of ranging from 1 to 5ppm, a red dye in an amount of ranging from 1 to 3ppm and TiO₂ in an amount of ranging from 0 to 4wt% at the same time in the reactor; and then
(c) undergoing a second-stage polycondensation to obtain the resultant PET resin with intrinsic viscosity ranging from 0.5 to 0.7dl/g; finally, the PET resin is cooled rapidly in cooling water and granulated into PET chips.

With the method, the resultant PET resin is full-bright, bright, semi-dull or full-dull, depending on the presence of the TiO₂ added and the amount of the TiO₂ added. Specifically speaking, a full-bright PET resin contains no TiO₂; a bright PET resin contains 0.01~0.1wt% of TiO₂; a semi-dull PET resin contains 0.2~0.4wt% of TiO₂; and a full-dull PET resin contains 1~4wt% of TiO₂.

In the above-described method, the diacid component is purified terephthalic acid (PTA), iso-phthalic acid, succinic acid, glutaric acid, adipic acid, sebacic acid, the like, or combination thereof.

In the above-described method, the diol component is ethylene glycol (EG), diethylene glycol, 1,3-propanediol, 1,4-butanediol, the like, or combination thereof.

The inorganic Ti-Mg catalyst used in the present invention is synthesized by chemical precipitation as described below:
1. Allowing an aqueous MgCl₂ solution and an aqueous NaOH solution to react at 170°C for about 30 minutes, and afterward, filtering and washing the reactant to obtain Mg(OH)₂ aqueous slurry; and
2. Mixing an aqueous TiCl₄ solution and an aqueous NaOH solution, adding the mixed solution into the Mg(OH)₂ aqueous slurry drop by drop, ripening the resultant slurry for one hour to make TiO₂ cover Mg(OH)₂ particles, filtering the slurry, and washing, dehydrating as well as comminuting the filtered solid, thereby obtaining the inorganic Ti-Mg catalyst in the form of particles.

The inorganic Ti-Mg catalyst particles have a particle diameter ranging from 0.1 to 1.0µm. The inorganic Ti-Mg catalyst contains titanium element ranging from 1 to 20wt% and has a molar ratio of titanium to magnesium ranging about from 0.005 to 1, or preferably ranging about from 0.01 to 0.2.

The inorganic Ti-Mg catalyst particles produced with the aforesaid method excels conventional organic catalysts and demonstrates advantages as follows:
1. In the polycondensation process of the PET resin, the inorganic Ti-Mg catalyst is free from being inactivated by TiO₂ whereas an organic catalyst tends to be inactivated in the presence of TiO₂; and
2. Since the inorganic Ti-Mg catalyst particles possess a specially structural feature that titanium element is uniformly distributed over surfaces of the Mg(OH)₂ particles, the result was that in the polycondensation process the inorganic Ti-Mg catalyst particles are capable of maximizing the area of surface of titanium for reaction with a reactant. So that, for achieving the same predetermined catalysis in the polycondensation process, the inorganic Ti-Mg catalyst particles if compared with an
organic catalyst may contains much less amount of titanium element than that of the organic catalyst does.

The inorganic Ti-Mg catalyst particles are then mixed with ethylene glycol to form a catalyst solution with a concentration ranging from 0.01 to 15wt%.

The PET resin of the present invention is applicable to a melt spinning process for producing PET polyester fiber. Prior to the melt spinning process, the PET resin has to be crystallized and dehydrated to render its water contents less than 50ppm for preventing the PET chips from hydrolyzing in the melt spinning process. The dehydrated PET resin is extruded with a screw extruder at temperature 260°C to 295°C and then melted and spun by a spinning assembly at temperature 275°C to 300°C to form yarn. After undergoing cross-wind cooling and finishing, the yarn gets twisted with guiding rollers and taken up at 4000m/min to form POY (Pre-Oriented Yarn) cakes.

The PET resin of the present invention and the PET polyester fiber made therefrom possess the following features.
1. Produced by using inorganic Ti-Mg catalyst and the small amount of blue and red dyes, the PET resin of the present invention needs no phosphorus stabilizer to prevent the yellowish color tone as that presented in conventional PET resin and gives a color tone similar to that of PET resin produced in the presence of an antimony-containing catalyst.
2. Since the PET resin of the present invention contains no phosphorus stabilizer, it eradicates the problem of inhibition of catalytic activity of the titanium polycondensation catalyst by a phosphorus stabilizer. Hence, it is feasible to produce the PET resin with less amount of the titanium polycondensation catalyst according to the present invention.
3. Since the PET resin of the present invention contains neither an antimony catalyst nor a phosphorus stabilizer, in the melt spinning process, the provided PET resin exhibits excellent spinnability and prevents yarn breaks as well as TiO₂ delustering agent aggregation, so that the resultant PET polyester fiber may present excellent color tone and glossiness.
4. As the PET polyester fiber resin made of the PET resin of the present invention by the melt spinning process contains no heavy metals of antimony and cobalt, it is environmentally friendly and causes no heavy metal-based pollution to the environment.

In the following examples, the Intrinsic Viscosity (IV) of the PET copolymers and the hues of the PET resins are measured by the method given below.

The IV is analyzed by an Ubelohde viscosity meter at 25°C in a mixed solvent of phenol and tetra-chloro ethane mixed in a ratio of 3:2.

The hues of the PET resin particles are taken by a spectrophoto meter from TOKYO DENSHOKU CO.,LTD bearing the model no. TC-180OMKII, and are expressed by L/a/b.

The higher the "L" value is, the whiter the PET resin particles are. The lower the "L" value is, the darker the PET resin particles are. The higher the "a" value is, the redder the PET resin particles are. The lower the "a" value is, the greener the PET resin particles are. The higher the "b" value is, the yellower the PET resin particles are. The lower the "b" value is, the bluer the PET resin particles are.

The spinning statuses of the PET polyester fiber in the following examples are determined by agglomerate on the spinneret, yarn break, and broken filament.

Therein, the frequency of yam breaks in continuous spinning for 2 days is taken and the number of broken filaments at the lateral of a 9-kg POY cake is counted for determining the spinning statuses of each produced PET resin.

### Example 1

In a 30L stainless steel reactor equipped with an eclectic heater, 12.11kg of PET oligomer and 3.87kg of ethylene glycol (EG) are mixed under atmospheric pressure and heated to 260°C. Then 1.3~1.6kg of distilled EG is collected and removed.

Prior to the polycondensation process, 50ppm of inorganic Ti-Mg catalyst containing 3.5ppm of titanium element therein, 2ppm of blue dye (e.g. Blue 104) and 1ppm of red dye (e.g. Red 195) are successively added in to the reactor.

Then the reactor is vacuated, allowing the pressure to be gradually reduced to less than 1mmHg. Afterward, the pre-polycondensation process is performed at 270°C, and the polycondensation process is performed at 280°C. Finally, 11.47kg of resultant PET resin having intrinsic viscosity (IV) of 0.651 dl/g is obtained, and the PET chips have hue L/a/b=48/-3.0/4.2.

Then the PET chips are crystallized and dehydrated to be later melted in a screw extruder at 296°C. The melt is extruded with a spinneret having 72 orifices with diameter of 0.2mm and cooled by cross-wind set in temperature of 23°C and at speed of 0.55m/s. After finishing and getting twisted, the resultant yam is taken up at 2850m/min to form full-bright POY having a fiber fineness of 65den/72f.

The spinning statuses of the PET polyester fiber, including agglomerate on the spinneret, yarn breaks and broken filaments, are listed in Table 1.

### Example 2

A PET resin is made by a method similar to that described in Example 1 except that, in Example 2, prior to the polycondensation process, TiO₂ is added as an additive with an adding amount of 0.35wt% of the PET resin.

The resultant PET resin has intrinsic viscosity (IV) of 0.648dl/g, and the PET chips have hue of L/a/b=74/-1.1/5.0.

Then the resultant PET chips are crystallized and dehydrated before being processed by the method described in Embodiment 1, finally a semi-dull POY having a fiber fineness of 65den/72f is then produced.

The spinning statuses of the PET polyester fiber made from the PET chips are also listed in Table 1.

### Comparative Example 1

A PET resin is made by a method similar to that described in Example 1 except that TBT is used to replace the Ti-Mg catalyst as the polycondensation catalyst, wherein the TBT contains 6ppm of titanium element, and that 217ppm of TEPA is added. The resultant PET resin has intrinsic viscosity (IV) of 0.650dl/g, and the PET chips have hue of L/a/b=47/-3.0/6.9.

The spinning statuses of the PET polyester fiber made from the PET chips are also listed in Table 1.

### Comparative Example 2

A PET resin is made by a method similar to that described in Example 2 except that TBT is used to replace the Ti-Mg catalyst as the polycondensation catalyst, wherein the TBT contains 6ppm of titanium element, and that 217ppm of TEPA as well as 0.35wt% of TiO₂ are added. The resultant PET resin has intrinsic viscosity (IV) of 0.642dl/g, and the PET chips have hue of L/a/b=73/-1.5/7.5.

The spinning statuses of the PET polyester fiber made from the PET chips are also listed in Table 1.

### Comparative Example 3

A PET resin is made by a method similar to that described in Example 2 except that 400ppm of antimony acetate replaces the Ti-Mg catalyst as the polycondensation catalyst, wherein the antimony acetate has 162ppm of antimony. The resultant ester copolymer has intrinsic viscosity IV of 0.650dl/g, and the PET chips have hue of L/a/b=74/ -3.5/4.4.

The spinning statuses of the PET polyester fiber made from the PET chips are also listed in Table 1.

### Conclusion

The following conclusions are drawn from the results of Examples 1 and 2 and Comparative Examples 1 to 3, as shown in Table 1:
1. Superior hues are presented by the PET resins of Example 1 (Inorganic Ti-Mg catalyst used) and Comparative Example 1 (TBT catalyst used), where no TiO₂ is added.
2. Among the Example and Comparative Examples where TiO₂ is added, the resultant PET resins of Example 2 (Inorganic Ti-Mg catalyst used) and Comparative Example 3 (Antimony catalyst used) present similar hues that are both superior to that of Comparative Example 2 (TBT catalyst used).
3. The resultant PET resins of Example 1 (Inorganic Ti-Mg catalyst used) and Example 2 (Inorganic Ti-Mg catalyst and TiO₂ used) provide excellent spinnability in spinning, for example, causing no accumulation on the spinneret, having no yam break in 2-day continuous spinning, and presenting less broken filaments.

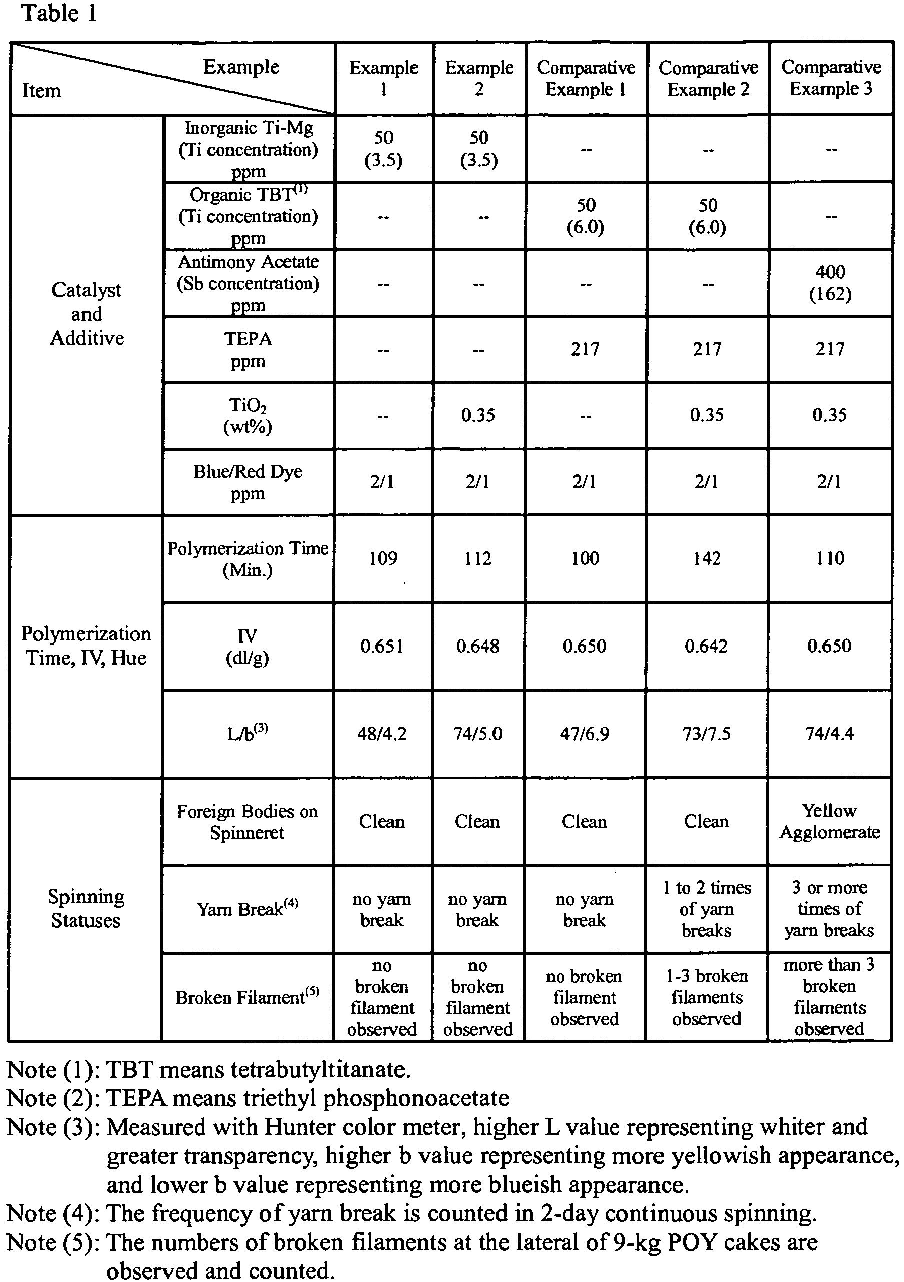

## Claims

1. An antimony-free PET resin, contains polyethylene terephthalate (PET), blue dye, red dye and titanium dioxide (TiO₂), **characterized in that** the PET resin is prepared by the following steps comprising:
(a) undergoing a first-stage direct esterification reaction in a reactor to obtain a reaction mixture by reacting purified terephthalic acid with ethylene glycol;
(b) after step (a) being completed, based on the total PET resin weight, adding the following additives into the reactor at the same time:
an inorganic Ti-Mg catalyst having an particle size between 0.1 to 1.0 µm in an amount of ranging from 30 to 150ppm, wherein the inorganic Ti-Mg catalyst containing titanium element 2 to 10ppm and made in form of titanium dioxide (TiO₂) covered on magnesium hydroxide (Mg(OH)₂) to obtain a molar ratio of titanium to magnesium ranging from 0.005 to 1,
a blue dye in an amount of ranging from 1 to 5 ppm,
a red dye in an amount of ranging from 1 to 3 ppm and
titanium dioxide (TiO₂) in an amount of ranging from 0 to 4wt%; and
(c) undergoing a second-stage polycondensation to obtain the PET resin with intrinsic viscosity ranging from 0.5 to 0.7 dl/g.

2. The antimony-free PET resin as defined in claim 1, wherein the inorganic Ti-Mg catalyst added in step (b) contains titanium element ranging from 1 to 20wt%

3. The antimony-free PET resin as defined in claim 2, wherein the inorganic Ti-Mg catalyst contains a molar ratio of titanium to magnesium ranging from 0.01 to 0.2.

4. A PET polyester fiber containing no heavy metal of antimony, **characterized in that** the PET polyester fiber is produced from the PET resin of claim 1 by a melt spinning process.

## Patentansprüche

1. Antimonfreies PET-Harz, enthaltend Polyethylenterephthalat, blauen Farbstoff, roten Farbstoff und Titandioxid (TiO₂), **dadurch gekennzeichnet, dass** das PET-Harz durch folgende Schritte hergestellt wird, umfassend:
(a) Vornehmen einer direkten Veresterungsreaktion in einer ersten Stufe in einem Reaktionsgefäß, um ein Reaktionsgemisch durch Umsetzung von reiner Terephthalsäure mit Ethylenglykol zu erhalten;
(b) nach Abschluss von Schritt (a), gleichzeitige Zugabe der folgenden Zuschlagstoffe in das Reaktionsgefäß, bezogen auf das Gesamtgewicht des PET-Harzes:
einen anorganischen Ti-Mg-Katalysator mit einer Partikelgröße zwischen 0,1 bis 1,0 µm in einer Menge von 30 bis 150 ppm, wobei der anorganische Ti-Mg-Katalysator 2 bis 10 ppm Titan enthält und in Form von Titandioxid (TiO₂) Magnesiumhydroxid (Mg(OH)₂) bedeckt, um ein Molverhältnis von Titan zu Magnesium im Bereich von 0,005 bis 1 zu erhalten,
einen blauen Farbstoff in einer Menge von 1 bis 5 ppm,
einen roten Farbstoff in einer Menge von 1 bis 3 ppm, und
Titandioxid (TiO₂) in einer Menge von 0 bis 4 Gew.%; und
(c) Vornehmen einer Polykondensation in einer zweiten Stufe, um das PET-Harz mit einer intrinsischen Viskosität im Bereich von 0,5 bis 0,7 dl/g zu erhalten.

2. Antimonfreies PET-Harz nach Anspruch 1, bei dem der in Schritt (b) hinzugefügte anorganische Ti-Mg-Katalysator 1 bis 20 Gew.% Titan enthält.

3. Antimonfreies PET-Harz nach Anspruch 2, bei dem der anorganische Ti-Mg Katalysator ein Molverhältnis von Titan zu Magnesium im Bereich von 0,01 bis 0,2 aufweist.

4. PET-Polyesterfaser, die kein Antimonschwermetall enthält, **dadurch gekennzeichnet, dass** die PET-Polyesterfaser aus dem PET-Harz gemäß Anspruch 1 durch ein Schmelzspinnverfahren hergestellt ist.

## Revendications

1. Résine PET exempte d'antimoine, contenant du polytéréphtalate d'éthylène (PET), un colorant bleu, un colorant rouge et du dioxyde de titane (TiO₂), **caractérisée en ce que** la résine PET est préparée par les étapes suivantes comprenant :
(a) le fait de subir une réaction d'estérification directe de première étape dans un réacteur pour obtenir un mélange de réaction en faisant réagir de l'acide téréphtalique purifié avec de l'éthylène glycol ;
(b) après que l'étape (a) ait été terminée, basée sur le poids total de la résine PET, l'ajout des additifs suivants dans le réacteur en même temps :
un catalyseur inorganique Ti-Mg ayant une taille de particules entre 0,1 et 1,0 µm en une quantité de l'ordre de 30 à 150 ppm, le catalyseur inorganique Ti-Mg contenant un élément de titane de 2 à 10 ppm et fait sous forme de dioxyde de titane (TiO₂) couvert sur de l'hydroxyde de magnésium (Mg(OH)2) pour obtenir un rapport molaire du titane au magnésium de l'ordre de 0,005 à 1,
un colorant bleu en une quantité de l'ordre de 1 à 5 ppm,
un colorant rouge en une quantité de l'ordre de 1 à 3 ppm et
du dioxyde de titane (TiO₂) en une quantité de l'ordre de 0 à 4 % en poids et
(c) le fait de subir une polycondensation de deuxième étape pour obtenir la résine PET avec une viscosité intrinsèque de 0,5 à 0,7 dl/g.

2. Résine PET exempte d'antimoine selon la revendication 1 dans laquelle le catalyseur inorganique Ti-Mg ajouté à l'étape (b) contient un élément de titane de l'ordre d'1 à 20 % en poids.

3. Résine PET exempte d'antimoine selon la revendication 2 dans laquelle le catalyseur inorganique Ti-Mg contient un rapport molaire du titane au magnésium de l'ordre de 0,01 à 0,2.

4. Fibre de polyester PET ne contenant pas de métal lourd d'antimoine, **caractérisée en ce que** la fibre de polyester PET est produite à partir de la résine PET selon la revendication 1 par un processus de filature en fusion.
